# EUROPEAN PATENT APPLICATION

(11) **EP 4 527 724 A1**
(43) Date of publication of application: **26.03.2025**
(21) Application number: 23815188.0
(22) Date of filing: 30.05.2023
(51) Int. Cl.: B62K 5/01, B60G 21/00, B60G 7/00

(54) **ALL-TERRAIN VEHICLE**

(30) Priority: 30.05.2022 CN 202210605865
(71) Applicant: Zhejiang CFMOTO Power Co., Ltd., Hangzhou, Zhejiang 311199 (CN)
(72) Inventor: LUO, Longping, Hangzhou, Zhejiang 311199 (CN); WANG, Jianyong, Hangzhou, Zhejiang 311199 (CN); ZHANG, Junfeng, Hangzhou, Zhejiang 311199 (CN); ZHONG, Mei, Hangzhou, Zhejiang 311199 (CN); ZHOU, Liangchen, Hangzhou, Zhejiang 311199 (CN)
(74) Representative: Sun, Yiming
(86) International application number: PCT/CN2023/097036
(87) International publication number: WO 2023/232009

(57) **Abstract**

An all-terrain vehicle includes a frame, a wheel system, a suspension system, a prime mover assembly, and a transmission system. The wheel system includes a first wheel and a second wheel. The prime mover assembly is at least partially disposed on the frame. The transmission system is connected to the wheel system and the prime mover assembly and the transmission system includes a drive axle and a drive shaft. Defining a projection plane perpendicular to the left-right direction of the all-terrain vehicle as a first projection plane, defining a projection plane perpendicular to the up-down direction of the all-terrain vehicle as a second projection plane, and defining a projection plane perpendicular to the front-rear direction of the all-terrain vehicle as a third projection plane. Defining a projection of the output center of the drive axle on the first projection plane in the left-right direction as a first projection point, defining a projection of the center of the wheel system on the first projection plane in the left-right direction as a second projection point, the first projection point located above the second projection point; defining a projection of the axis of the drive shaft on the third projection plane in the front-rear direction as a first projection line; defining a projection of the second projection plane on the third projection plane in the front-rear direction as a second projection line; an angle defined by the first projection line and the second projection line is in the range from 0° to 60°. The comfort and service life of all-terrain vehicles have been improved.

## Description

### RELATED APPLICATION INFORMATION

The present application claims priority to the Chinese Patent Application No. 2022106058655, entitled ALL-TERRAIN VEHICLE, filed on May. 30, 2022. The entire contents of the above-referenced applications are incorporated herein by reference.

### FIELD OF THE DISCLOSURE

The present application relates to the field of vehicle technology, and particularly relates to an all-terrain vehicle.

### BACKGROUND OF THE DISCLOSURE

All-terrain vehicle is a four-wheeled off-road vehicle that travels in all weather and on all terrains. A frame of the all-terrain vehicle is the key component and the main load-bearing component of the vehicle, which has a very important role in the reliability and service life study of the vehicle, and the maneuvering stability of the vehicle, driving safety, riding comfort are also inseparable from the structure and performance of the frame. In order to adapt to a variety of complex operating environments, higher demands are placed on the suspension of all-terrain vehicles.

At present, although some all-terrain vehicles are equipped with better performance suspensions, all-terrain vehicles are still unable to adapt to some special road conditions, thereby unduly affecting their comfort, sports performance, and even their service life.

No effective solution has been proposed in the current state of the art for how to optimize the suspension structure to improve the comfort and sport performance of the all-terrain vehicle and increase the service life of the vehicle.

### SUMMARY OF THE INVENTION

Embodiments of the present application provide an all-terrain vehicle to solve at least one of the problems in the background of the application.

In a first aspect, an embodiment of the present application provides an all-terrain vehicle, which includes a frame, a wheel system, a suspension system, a vehicle cover, a prime mover assembly, and a transmission system. The wheel system includes a first wheel and a second wheel. The suspension system includes a front suspension and a rear suspension. The first wheel is connected to the frame by the front suspension, and the second wheel is connected to the frame by rear suspension. The vehicle cover is at least partially disposed on the frame. The prime mover assembly is at least partially disposed on the frame. The transmission system is connected to the wheel system and the prime mover assembly, and the transmission system includes a drive axle and a drive shaft. A projection plane perpendicular to the left-right direction of the all-terrain vehicle is defined as a first projection plane, a projection plane perpendicular to the up-down direction of the all-terrain vehicle is defined as a second projection plane, and a projection plane perpendicular to the front-rear direction of the all-terrain vehicle is defined as a third projection plane. A projection of the output center of the drive axle on the first projection plane in the left-right direction is defined as a first projection point, and a projection of the center of the wheel system on the first projection plane in the left-right direction is defined as a second projection point, and the first projection point is located above the second projection point. a projection of the axis of the drive shaft on the third projection plane in the front-rear direction defined as a first projection line; and a projection of the second projection plane on the third projection plane in the front-rear direction is defined as a second projection line; and an angle defined by the first projection line and the second projection line is in the range from 0° to 60°. The front suspension includes an upper rocker arm and a lower rocker arm. The upper rocker arm includes a first mounting point defined at one end of the upper rocker arm and a second mounting point defined at the other end of the upper rocker arm. The lower rocker arm includes a third mounting point defined at one end of the lower rocker arm and a fourth mounting point defined at the other end of the lower rocker arm. A distance between the first mounting point and the second mounting point is defined as L1, and a distance between the third mounting point and the fourth mounting point is defined as L2, a ratio of L1 to L2 is in the range from 0.5 to 1.15.

In a second aspect, an embodiment of the present application provides an all-terrain vehicle including a frame, a wheel system, a suspension system, a prime mover assembly and a transmission system. The wheel system includes a first wheel and a second wheel. The suspension system includes a front suspension and a rear suspension. The first wheel is connected to the frame by the front suspension, and the second wheel is connected to the frame by rear suspension. The prime mover assembly is at least partially disposed on the frame. The transmission system is connected to the wheel system and the prime mover assembly, and the transmission system includes a drive axle and a drive shaft; A projection plane perpendicular to the left-right direction of the all-terrain vehicle is defined as a first projection plane, a projection plane perpendicular to the up-down direction of the all-terrain vehicle is defined as a second projection plane, and a projection plane perpendicular to the front-rear direction of the all-terrain vehicle is defined as a third projection plane. A projection of the output center of the drive axle on the first projection plane in the left-right direction defined as a first projection point, and a projection of the center of the wheel system on the first projection plane in the left-right direction defined as a second projection point, and the first projection point is located above the second projection point. A projection of the axis of the drive shaft on the third projection plane in the front-rear direction is defined as a first projection line; and a projection of the second projection plane on the third projection plane in the front-rear direction is defined as a second projection line; and an angle defined by the first projection line and the second projection line is in the range from 0° to 60°.

In a third aspect, an embodiment of the present application provides an all-terrain vehicle including a frame; a wheel system, a suspension system, a prime mover assembly, and a transmission system. The wheel system includes a first wheel and a second wheel. The suspension system includes a front suspension and a rear suspension. The first wheel is connected to the frame by the front suspension, and the second wheel is connected to the frame by the rear suspension. The prime mover assembly is at least partially disposed on the frame. The transmission system is connected to the wheel system and the prime mover assembly, and the transmission system includes a drive axle and a drive shaft. A projection plane perpendicular to the left-right direction of the all-terrain vehicle is defined as a first projection plane, a projection plane perpendicular to the up-down direction of the all-terrain vehicle is defined as a second projection plane, and a projection plane perpendicular to the front-rear direction of the all-terrain vehicle is defined as a third projection plane. A projection of the output center of the drive axle on the first projection plane in the left-right direction is defined as a first projection point, and a projection of the center of the wheel system on the first projection plane in the left-right direction is defined as a second projection point, and the first projection point is located above the second projection point. A projection of the axis of the drive shaft on the third projection plane in the front-rear direction is defined as a first projection line; and a projection of the second projection plane on the third projection plane in the front-rear direction is defined as a second projection line, and an angle defined by the first projection line and the second projection line is in the range from 0° to 60°. The wheel system includes a first position at the highest point of the upward hopping, a second position at a lowest point of a downward hopping, and an initial position at rest. A maximum distance between the first position and the initial position is defined as L1, and a maximum distance between the second position and the initial position is defined as L2, a ratio of L1 to L2 is in the range from 1 to 10.

Compared with the related technologies, the all-terrain vehicle provided in this embodiment, enhances the hopping interval between the top and the bottom of the suspension, and increases the transmission angle, thereby improves the comfort and service life of the all-terrain vehicle by setting the relative positions of the rocker arm and the drive axle.

The details of one or more embodiments are presented in the following drawings and descriptions to make the other features, objectives, and advantages of the present invention more concise and understandable.

### BRIEF DESCRIPTION OF THE DRAWINGS

The drawings described here are intended to provide a further understanding of the present invention and form a part hereof. The illustrative embodiments and explanations of the detailed description are used to explain the present invention and do not constitute an improper limitation of the invention. In the drawings:
FIG. 1 is a structural schematic view of an all-terrain vehicle of the present invention.
FIG. 2 is a partial structural schematic view of the all-terrain vehicle of the present invention.
FIG. 3 is a structural schematic view of a first lampshade and a suspension system of the all-terrain vehicle of the present invention.
FIG. 4 is a structural schematic view of a knuckle of the all-terrain vehicle of the present invention.
FIG. 5 is a structural schematic view of the suspension system and a wheel system of the all-terrain vehicle of the present invention.
FIG. 6 is another structural schematic view of the suspension system and the wheel system of the all-terrain vehicle of the present invention.
FIG. 7 is a structural schematic view of the wheel system of the all-terrain vehicle of the present invention.
FIG. 8 is a structural schematic view of a rear suspension of the all-terrain vehicle of the present invention.
FIG. 9 is another structural schematic view of a rear suspension of the all-terrain vehicle of the present invention.
FIG. 10 is a structural schematic view of the suspension system, a transmission system and a frame of the all-terrain vehicle of the present invention.
FIG. 11 is a structural schematic view of the suspension system of the all-terrain vehicle of the present invention.
FIG. 12 is a structural schematic view of the suspension system of the all-terrain vehicle of the present invention from another angle.
FIG. 13 is a structural schematic view of the suspension system and a wheel system of the all-terrain vehicle of the present invention.

### DETAILED DESCRIPTION

For a better understanding of the purpose, technical solutions and advantages of the present invention, the present invention will be described and illustrated in conjunction with the accompanying drawings and embodiments below.

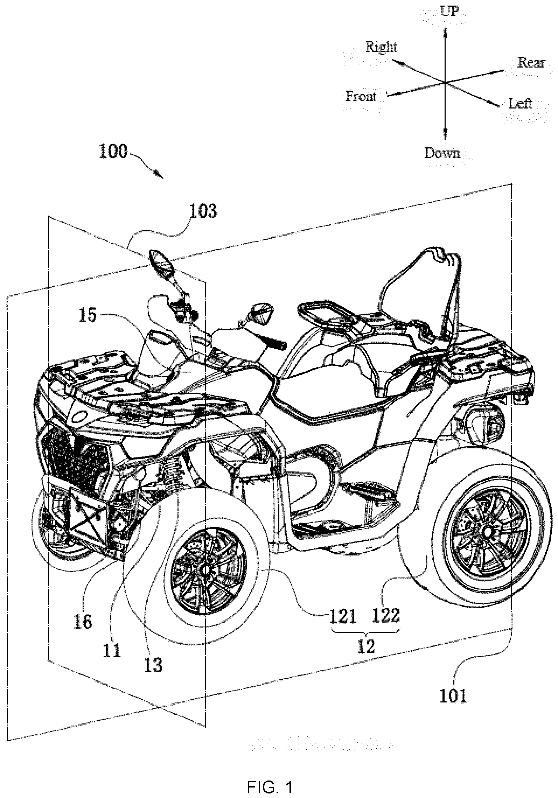

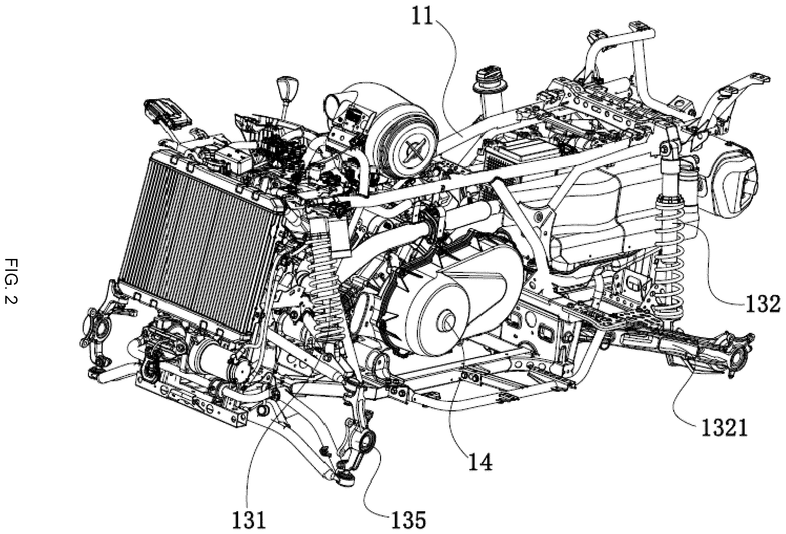

As shown in FIGS. 1 and 2, an all-terrain vehicle 100 includes a frame 11, a wheel system 12, a suspension system 13, a prime mover assembly 14, a vehicle cover 15, and a transmission system 16. The suspension system 13 includes a front suspension 131 and a rear suspension 132, which are used to connect the frame 11 and the wheel system 12. The wheel system 12 is at least partially disposed on the frame 11, and the wheel system 12 includes a pair of first wheels 121 and a pair of second wheels 122. The first wheels 121 are connected to the frame 11 by the front suspension 131, and the second wheels 122 are connected to the frame 11 by the rear suspension 132. The prime mover assembly 14 is at least partially disposed on the frame 11 for providing power to drive the wheel system 12. The vehicle cover 15 is at least partially disposed on the frame 11. The transmission system 16 is at least partially disposed on the frame 11. The transmission system 16 is connected to the wheel system 12 and the transmission system 16, is also connected to the prime mover assembly 14 for transmitting power from the prime mover assembly 14 to the wheel system 12. In order to clearly illustrate the technical solution of the present invention, front, rear, left, right, up and down are also defined as shown in FIG. 1.

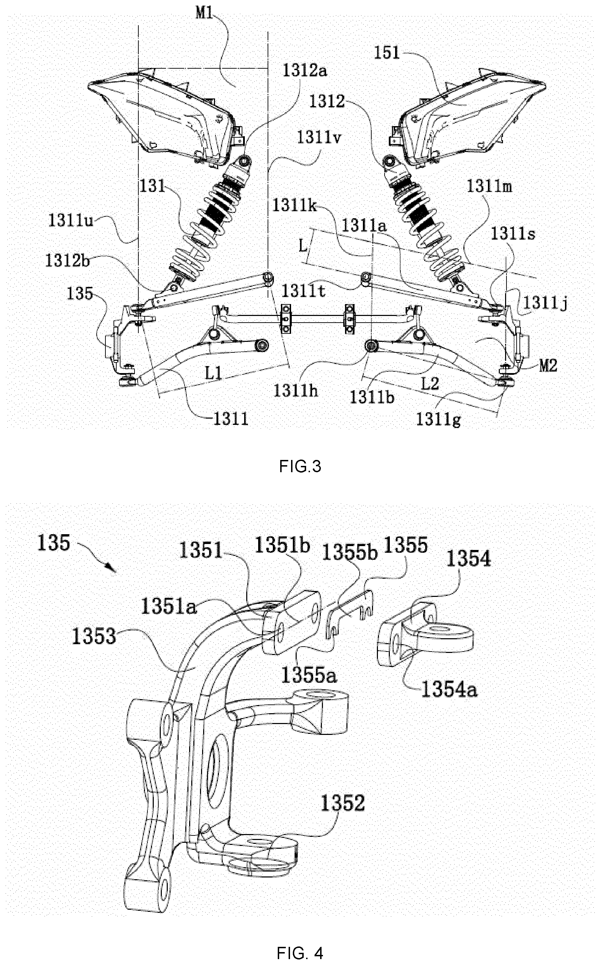

As shown in FIGS. 2-4, as an embodiment, the suspension system 13 further includes a knuckle 135. The knuckle 135 is at least partially coupled to the first wheel 121 and at least partially coupled to the front suspension 131, and the knuckle 135 is used to transfer and tolerate the front load of the all-terrain vehicle 100 and to drive the deflection of the first wheel 121, thereby steering the all-terrain vehicle 100. Specifically, a first connecting portion 1351 is defined at one end of the knuckle 135 and a second connecting portion 1352 is defined at the other end of the knuckle 135. The front suspension 131 includes a front rocker arm 1311, one end of the front rocker arm 1311 is connected to the frame 11, and the first connecting portion 1351 and the second connecting portion 1352 of the knuckle 135 are both connected to the other end of the front rocker arm 1311. The front rocker arm includes an upper rocker arm 1311a and a lower rocker arm 1311b. One end of the upper rocker arm 1311a is connected to the first connecting portion 1351 of the knuckle 135, and the other end of the upper rocker arm 1311a is connected to the frame 11. One end of the lower rocker arm 1311b is connected to the second connecting portion 1352, and the other end of the lower rocker arm 1311b is connected to the frame 11. For the above description, the knuckle 135 and the front suspension 131 can be connected stably. In this embodiment, the knuckle 135 includes a main body 1353 and a connecting member 1354. A first connecting portion 1351 is defined at one end of the main body 1353 and a second connecting portion 1352 is defined at the other end of the main body 1353. The connecting member 1354 is used to connect the upper rocker arm 1311a and the first connecting end 1351, thereby realizing a stable connection between the steering knuckle 135 and the upper rocker arm 1311a.

As an embodiment, an adjusting spacer 1355 is disposed between the first connecting portion 1351 and the connecting member 1354, and the adjusting spacer 1355 is used to change the camber angle of the first wheel 121, so as to compensate for manufacturing errors and improve the handling characteristics of the all-terrain vehicle 100. In addition, the adjusting spacer 1355 can change the camber angle of the first wheel 121 so that the all-terrain vehicle 100 has a good grip under extreme working conditions and improves the safety of the all-terrain vehicle 100. Wherein, the thickness of the adjusting spacer 1355 is a predetermined thickness, and the predetermined thickness can be adjusted according to the actual demand, so as to adjust the camber angle of the first wheel 121. End faces of the first connecting portion 1351 includes at least a first end face and a second end face, the first end face and the second end face are substantially symmetrical relative to a line on the end face of the first connecting portion 1351. The adjusting spacer 1355 is attached to the first end face or the second end face. Along the direction perpendicular to the end face of the first connecting portion 1351, a projection of the adjusting spacer 1355 on the end face of the first connecting portion 1351 is a projection area, the area of the end face of the first connecting portion 1351 is an end face area, and the area of the projection area is less than or equal to one-half of the end face area. The projection area may substantially overlap with the first end face or the second end face. Specifically, the end face of the first connection portion 1351 defines a plurality of first connection holes 1351a. The centers of the plurality of first connection holes 1351a are substantially located on the same straight line. A line connecting the centers of the plurality of first connection holes 1351a is defined as a fifth straight line 1351b. The end face of the first connection portion 1351 is divided into the first end face and the second end face by the fifth straight line 1351b. Along the up-down direction of the all-terrain vehicle 100, the first end face is at least partially positioned above the second end face. The contour of the cross-section of the adjusting spacer 1355 substantially the same as the contour of the first end face or the second end face, thereby improving installation stability of the adjusting spacer 1355.

The adjusting spacer 1355 includes a plurality of first half-holes 1355a, and the connecting member 1354 defines a plurality of second connection holes 1354a. The center of the first connection hole 1351a, the center of the first half-hole 1355a, and the center of the second connection hole 1354a are substantially located on the same straight line, so that a fixing member is capable of sequentially passing through the first connection hole 1351a, the first half-hole 1355a, and the second connection hole 1354a to facilitate the installation of the first connecting end 1351, the adjusting spacer 1355, and the connecting member 1354. Specifically, one of a side face of the adjusting spacer 1355 attached to the first end face or the second end face, and the other side face of the adjusting spacer 1355 attached to the connecting member 1354. Meanwhile, the fixing member passes through the second connecting hole 1354a, the first half-hole 1355a, and the first connecting hole 1351a in turn, so that the connecting member 1354, the adjusting spacer 1355 and the first connecting end 1351 are stably connected. In this embodiment, the connecting member 1354 may be lugs, and the fixing member may be bolts.

As an embodiment, the adjusting spacer 1355 defines a slot 1355b therein. The slot 1355b is used to reduce the weight of the adjusting spacer 1355, thereby decreasing the lightweight of the all-terrain vehicle 100. A plurality of first half-holes 1355a are defined in two side portions of the slot 1355b along the longitudinal direction of the slot 1355b. Specifically, the slot 1355b is positioned on the adjusting spacer 1355, so that the adjusting spacer 1355 is substantially C-shaped, and the opening of slot 1355b is substantially downwardly along the up-down direction of the all-terrain vehicle 100. For the above description, the outer contour of the adjusting spacer 1355 are substantially the same as the contour of the first end face, thereby facilitating the installation of the adjusting spacer 1355 without interfering the installation of other parts.

As an embodiment, the number of first connection holes 1351a, the number of first half-holes 1355a, and the number of second connection holes 1354a are all two. Specifically, two first half-holes 1355a are positioned on either side portion of the slot 1355b, that means the slot 1355b is at least partially positioned between the two first half-holes 1355a. for improving the space utilization of the adjusting spacer 1355, and making the structure of the adjusting spacer 1355 more compact.

It should be noted that the end face of the first connection portion 1351 also includes a symmetric line, and two first connection holes 1351a are substantially symmetrical relative to the symmetric line. The first end face and the second end face can also be positioned substantially symmetrical relative to the symmetric line.

As an embodiment, the knuckle 135 can also be positioned on the rear portion of the frame 11. Specifically, the knuckle 135 is at least partially coupled to the second wheel 122 and at least partially coupled to the rear suspension 132. The rear suspension 132 includes a rear rocker arm 1321. One end of the front rocker arm 1321 is connected to the frame 11, and the first connecting portion 1351 and the second connecting portion 1352 are both connected to the other end of the rear rocker arm 1321. Specifically, the knuckle 135 can be integrally formed with the rear rocker arm 1321, and the knuckle 135 is integrally formed with the end of rear rocker arm 1321 away from the frame 11, so as to make the structure of the knuckle 135 and the rear rocker arm 1321 more compact, and to facilitate the machining and assembly.

As an embodiment, the front suspension 131 includes a first shock absorber 1312. One end of the first shock absorber 1312 is connected to the frame 11, and the other end of the first shock absorber 1312 is connected to the front rocker arm 1311. Specifically, a first mounting point 1312a is defined at one end of the first shock absorber 1312, and a second mounting point 1312b is defined at the other end of the first shock absorber 1312. The first mounting point 1312a is connected to the frame 11, and the second mounting point 1312b is connected to the front rocker arm 1311. In this embodiment, the vehicle cover 15 includes a first lampshade 151, and the first lampshade 151 is at least partially disposed on the front portion of the frame 11. The first lampshade 151 is used to mount the headlamps, which are positioned at the front portion of the all-terrain vehicle 100. Within a projection plane 103 perpendicular to the front-rear direction of the all-terrain vehicle 100 (refer to FIG. 1), a projection of the upper edge of the first lampshade 151 on the projection plane in the front-rear direction is defined as first projection line. The upper rocker arm 1311a is positioned below the first lampshade 151. A projection of the axis of the upper rocker arm on the projection plane 103 in the front-rear direction defined as second projection line. A third mounting point 1311s is defined at one end of the upper rocker arm 1311a, and a fourth mounting point 1311t is defined at the other end of the upper rocker arm 1311a. The third mounting point 1311s is connected to the knuckle 135, and the fourth mounting point 1311t is connected to the frame 11. The upper rocker arm 1311a includes a sixth straight line 1311u extending in the up-down direction and passing through the third mounting point 1311s. The upper rocker arm 1311a further includes a seventh straight line 1311v extending in the up-down direction and passing through the fourth mounting point 1311t. A projection of the sixth straight line 1311u on the projection plane 103 in the front-rear direction is defined as third projection line, and a projection of the seventh straight line 1131v on the projection plane 103 in the front-rear direction is defined as fourth projection line. A projection area defined by the first projection line, the second projection line, the third projection line and the fourth projection line is defined as a third projection area M1. A projection area of the first projection point 1312a on the projection plane 103 in the front-rear direction defined as a fourth projection area. The fourth projection area is located in the third projection area M1. That is, the third projection area M1 covers the fourth projection area. For the above reason, it can minimize the impact of the installation of the first shock absorber 1312 on the installation of the tubes of the frame 11. That means, the installation of the first shock absorber 1312 have less impact on the installation of other components of the all-terrain vehicle 100. In addition, for the above description, the first mounting point 1312a can positioned below the upper edge of the first lampshade 151, reducing the intrusion of silt due to the exposure of the first shock absorber 1312, and increasing the service life of the first shock absorber 1312. It can also reduce the center of mass height of the all-terrain vehicle 100, thereby improving the operational stability of the all-terrain vehicle 100. Wherein, the first mounting point 1312a can be connected to the frame 11 by connectors such as sheet metal components. Therefore, the fourth projection area can be located in the third projection area M1.

In this embodiment, the lower rocker arm 1311b is positioned below the upper rocker arm1311a. A projection of the axis of the lower rocker arm 1311b on the projection plane 103 in the front-rear direction is defined as fifth projection line. A fifth mounting point 1311g is defined at one end of the upper rocker arm 1311b, and a sixth mounting point 1311h is defined at the other end of the upper rocker arm 1311b. When the lower rocker arm 1311b is a straight tube, the axis of the lower rocker arm 1311b is the axis of the straight tube. When the lower rocker arm 1311b is a bent tube, the axis of the lower rocker arm 1311b is the line passing the fifth mounting point 1311g and the sixth mounting point 1311h. The fifth mounting point 1311g is connected to the knuckle 135, and the sixth mounting point 1311h is connected to the frame 11. The lower rocker arm 1311b includes an eighth straight line 1311j extending in an up-down direction and passing through the fifth mounting point 1311g, and the lower rocker arm 1311b further includes a ninth straight line 1311k extending in an up-down direction and passing through the sixth mounting point 1311h. A projection of the eighth straight line 1311j on the projection plane 103 in the front-rear direction is defined as a sixth projection line. A projection of the ninth straight line 1131k on the projection plane 103 in the front-rear direction is defined as a seventh projection line. In addition, the upper rocker arm 1311a further includes a tenth straight line 1311m parallel to the axis of the upper rocker arm 1311a, and the tenth straight line 1311m located above the axis of the upper rocker arm 1311a. A projection of the tenth straight line 1311m on the projection plane 103 in the front-rear direction is defined as an eighth projection line. A distance between the eighth straight line and the second straight line is defined as L, that is, along the front-rear direction, the distance between the projecting of the tenth straight line 1311m on the projection plane 103 and the projection of the upper rocker arm 1311a on the projection plane 103 is L. Wherein, L is in the range from 0mm to 50mm. A projection area defined the fifth projection line, the sixth projection line, the seventh projection line and the eighth projection line is defined as a fifth projection area M2. A projection of the second projection point 1312b on the projection plane 103 in the front-rear direction is defined as a sixth projection area. The sixth projection area is located in the fifth projection area M2, that is, the fifth projection area M2 covers the sixth projection area. For the above description, it is possible to increase the stroke of the first shock absorber 1312, to facilitate the structural design of the first shock absorber 1312, to enhance the wheel hopping stroke of the all-terrain vehicle 100, to enhance the comfort of the all-terrain vehicle 100, and to improve the space utilization of the all-terrain vehicle 100. Wherein, wheel hopping stroke refers to the sum of the upward and downward displacements of the wheel system 12 during travel of the all-terrain vehicle 100. In addition, the second mounting point 1312b is connected to the front rocker arm 1311 by connectors such as sheet metal components. Therefore, the sixth projection area can be located in the fifth projection area M2.

In addition, for the above description, it is possible to reduce the effect of the mounting point of the first shock absorber 1312 on the installation of the other components of the all-terrain vehicle 100, make the all-terrain vehicle 100 more compact, and improve the operation stability of the all-terrain vehicle 100.

As an embodiment, a shortest distance between the third mounting point 1311c and the fourth mounting point 1311d is defined as L1, that is, the distance between the two mounting points of the upper rocker arm 1311a is L1. A shortest distance between the fifth mounting point 1311g and the sixth mounting point 1311h is defined as L2, that is, the distance between the two mounting points of the lower rocker arm 1311b is L2. a ratio of L1 to L2 is in the range from 0.5 to 1.15. Specifically, a ratio of L1 to L2 is in the range from 0.6 to 1.1. In this embodiment, a ratio of L1 to L2 is in the range from 0.7 to 1. For the above description, during the upward hopping of the first wheel 121, the structure and the mounting points of the upper rocker arm 1311a and the lower rocker arm 1311b can make the camber angle of the first wheel 121 change in a negative direction, to improve the grip of the tires of the all-terrain vehicle 100 around the corner. At the same time, the inward camber angle of the king pin is changed in a positive direction, which is conducive to increase the backward positive torque of the first wheel 121, thereby improving the handling performance of the all-terrain vehicle 100. Wherein, the king pin inward camber is the angle at which the king pin shaft is tilted inwardly toward the vehicle body when the first wheel 121 is viewed in front-rear direction of the all-terrain vehicle 100.

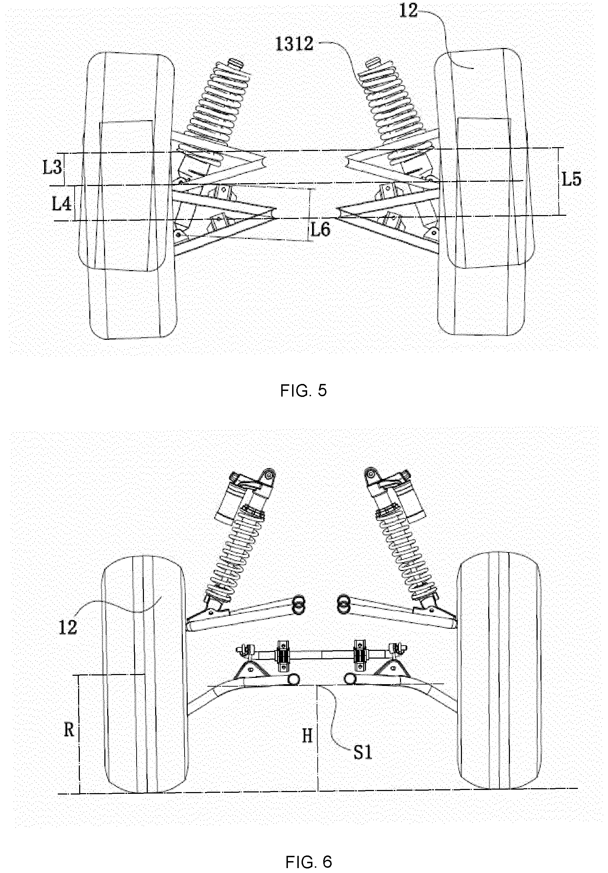

As shown in FIG.5, as an embodiment, during travel of the all-terrain vehicle 100, the wheel system 12 at least includes a first position, a second position, and an initial position. When the wheel system 12 is in the first position, the wheel system 12 is at the highest point of the upward hop of the wheel system 12. When the wheel system 12 is in the second position, the wheel system 12 is at the lowest point of the downward hop of the wheel system 12. When the wheel system 12 is in the initial position, the wheel system 12 is in the position of the wheel system 12 when the all-terrain vehicle 100 is stationary. A maximum distance between the first position and the initial position is defined as the upward hopping stroke L3, and a maximum distance between the second position and the initial position defined as downward hopping stroke L4. A ratio of L3 to L4 is in the range from 1 to 10. Specifically, a ratio of L3 to L4 is in the range from 2 to 9. In this embodiment, a ratio of L3 to L4 is in the range from 3 to 8. For the above description, the wheel hopping stroke is kept within a suitable range to ensure passing performance of the all-terrain vehicle 100 and improving the comfort of the all-terrain vehicle 100. Wherein, a line between a left wheel center and a right wheel center when the wheel system 12 is in the first position defined as first wheel line. A line between the left and right wheel centers when the wheel system 12 is in the initial position defined as second wheel line. A line between the left and right wheel centers when the wheel system 12 is in the second position defined as third wheel line. L3 can be a distance between the first wheel line and the second wheel line, and L4 can be a distance between the second wheel line and the third wheel line. Wherein, the left and right wheel centers is the wheel centers of the left and right wheels of the first wheels 121 or the second wheels 122.

As an embodiment, a sum of the upward and downward hopping stroke of the wheel system 12 is defined as L5, that is, the wheel hopping stroke is L5. Wherein, the wheel hopping stroke L5 refers to the maximum distance between the first position and the second position. A stroke of the first shock absorber 1312 is defined as L6. The stroke of the first shock absorber 1312 is the distance between the first shock absorber 1312 being compressed to its shortest length and being extended to its longest length. A ratio of L5 to L6 is in the range from 1.1 to 2. Specifically, a ratio of L5 to L6 is in the range from 1.2 to 1.9. In this embodiment, a ratio of L5 to L6 is in the range from 1.3 to 1.8. For the above description, the first shock absorber 1312 can be provided with a better hopping stroke to evenly absorb the impact of the road during the upward and/or downward hop of the wheel system 12, which can effectively cushion the impact of the road and facilitate the design and manufacturing process of the first shock absorber 1312. In this embodiment, the rear suspension 132 further includes a second shock absorber. A stroke of the second shock absorber is substantially same as the first shock absorber 1312. A ratio of the stroke of the second shock absorber to L5 is defined as first ratio. A ratio of the L5 to L6 is defined as second ratio. The first ratio and second ratio are equal. Thereby, the second shock absorber can be provided with a better hopping stroke to evenly absorb the impact of the road during the upward and/or downward hop of the wheel system 12, which can effectively cushion the impact of the road and facilitate the design and manufacturing process of the second shock absorber.

As shown in FIG.6, as an embodiment, the frame 11 further includes a lowest point S1 in the up-down direction of the all-terrain vehicle 100. It should be noted that a surface of the wheel system 12 in contact with the ground is horizontal plane. The horizontal plane is substantially perpendicular to the up-down direction of the all-terrain vehicle 100. A distance between the lowest point S1 and the horizontal plane is defined as H. That means the distance between the lowest point S1 and the ground is H. A radius of the wheel system 12 is defined as R. That means the radius of the wheel of the all-terrain vehicle 100 is R. A ratio of R to H is in the range from 0.9 to 1.4. Specifically, a ratio of R to H is in the range from 1 to 1.3. Wherein, R can be the radius of the first wheel 121 or the second wheel 122. The distance between the lowest point of the all-terrain vehicle 100 and the ground has a large effect on the center of mass height of the all-terrain vehicle 100. For the above description, it can improve the maneuvering stability of the all-terrain vehicle 100, and can also improve the passing performance of the all-terrain vehicle 100. It can also increase the wheel hopping travel, thereby facilitating the structural design and processing of the first shock absorber 1312 and the second shock absorber.

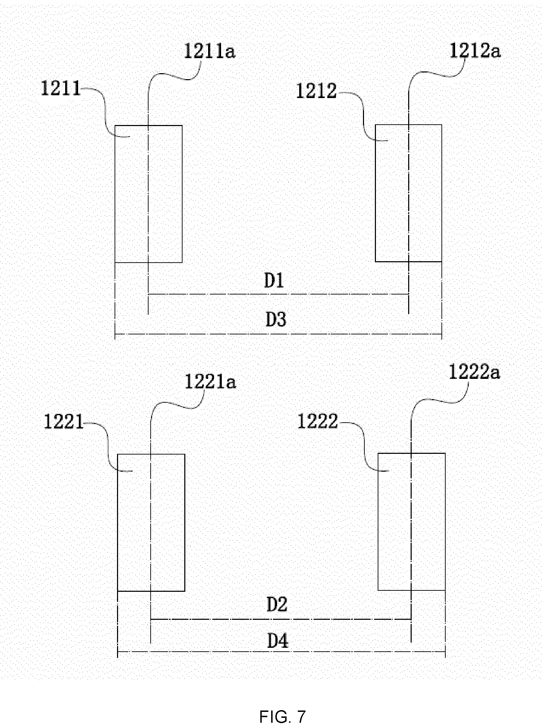

As shown in FIG.7, as an embodiment, the first wheels 121 includes a first front wheel 1211 and a second front wheel 1212. The first front wheel 1211 includes a first symmetry plane 1211a perpendicular to the left-right direction. The first front wheel 1211 is substantially symmetrical relative to the first symmetry plane 1211a. The second front wheel 1212 includes a second symmetry plane 1212a perpendicular to the left-right direction. The second front wheel 1212 is substantially symmetrical relative to the second symmetry plane 1212a. The second wheels 122 includes a first rear wheel 1221 and a second rear wheel 1222. The first rear wheel 1221 includes a third symmetry plane 1221a perpendicular to the left-right direction. The first rear wheel 1221 is substantially symmetrical relative to the third symmetry plane 1221a. The second rear wheel 1222 includes a fourth symmetry plane 1222a perpendicular to the left-right direction. The second rear wheel 1222 is substantially symmetrical relative to the fourth symmetry plane 1222a. A distance between the first symmetry plane 1211a and the second symmetry plane 1212a is defined as first wheel track width D1. A distance between the third symmetry plane 1221a and the fourth symmetry plane 1222a defined as second wheel track width D2. A ratio of the first wheel track width D1 to the second wheel track width D2 is in the range from 0.8 to 1.3. Specifically, A ratio of the first wheel track width D1 to the second wheel track width D2 is in the range from 0.9 to 1.2. In this embodiment, A ratio of the first wheel track width D1 to the second wheel track width D2 is in the range from 1 to 1.1. For the above description, the passing performance of the all-terrain vehicle 100 can be improved, the load transfer of the front axle of the all-terrain vehicle 100 can be reduced, the all-terrain vehicle 100 tends to be understeered, and the arrangement of the steering mechanism of the all-terrain vehicle 100 can be favored. Wherein, the steering mechanism is a mechanism of the all-terrain vehicle 100 used for steering, and the front axle of the all-terrain vehicle 100 is a connecting axle between the first front wheel 1211 and the second front wheel 1212.

As an embodiment, the first front wheel 1211, the second front wheel 1212, the first rear wheel 1221, and the second rear wheel 1222 all extend substantially in the front-rear direction of the all-terrain vehicle 100. The first front wheel 1211 and the first rear wheel 1221 are located on the left side of the all-terrain vehicle 100. The second front wheel 1212 and the second rear wheel 1222 are both on the right side of the all-terrain vehicle 100. A left end surface of the first front wheel 1211 is defined as first end surface. A right end surface of the second front wheel 1212 is defined as second end surface. A left end surface of the first rear wheel 1221 defined is as third end surface. A right end surface of the second rear wheel 1222 is defined as fourth end surface. The first end surface, the second end surface, the third end surface, and the fourth end surface are all disposed substantially perpendicular to the left-right direction. A distance between the first end surface and the second end surface is defined as a first end distance D3, that is the first end distance D3 is the distance between the outer surface of the first front wheel 1211 and the outer surface of the second front wheel 1212. A distance between the third end surface and the fourth end surface is defined as second end distance D4, that is the first second distance D4 is the distance between the outer surface of the first rear wheel 1221 and the outer surface of the second rear wheel 1222. A ratio of the first end distance D3 to the second end distance D4 is in the range from 0.8 to 1.5. Specifically, A ratio of the first end distance D3 and the second end distance D4 is in the range from 0.9 to 1.4. In this embodiment, A ratio of the first end distance D3 and the second end distance D4 is in the range from 1 to 1.3. For the above description, the passing performance of the all-terrain vehicle 100 can be improved, the load transfer of the front axle of the all-terrain vehicle 100 can be reduced, the all-terrain vehicle 100 tends to be understeered, and the arrangement of the steering mechanism of the all-terrain vehicle 100 can be favored.

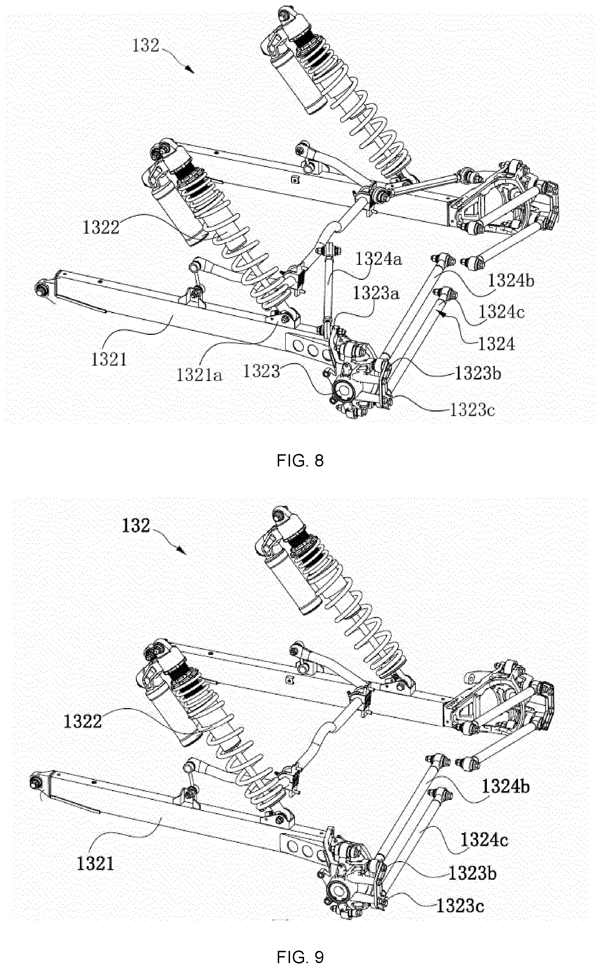

As shown in FIG.8, as an embodiment, the rear suspension 132 positioned at the rear portion of the frame 11 and connected to the frame 11. The rear suspension 132 includes the rear rocker arm 1321, a rear shock absorber 1322, a knuckle 1323, and a linkage assembly. One end of the front rocker arm 1321 is connected to the frame 11, and the other end of the rear rocker arm 1321 is connected to the knuckle 1323. One end of the rear shock absorber 1322 is connected to the frame 11, and the other end of the rear shock absorber 1322 is connected to the rear rocker arm 1321. One end of the linkage assembly 1324 is connected to the frame 11, and the other end of the linkage assembly 1324 is connected to the knuckle 1323. The knuckle 1323 is at least partially coupled to the wheel system 12, and the knuckle 1323 is used to transfer and tolerate the front load of the all-terrain vehicle 100 and to drive the deflection of the wheel system 12, and to steer the all-terrain vehicle 100. The linkage assembly 1324 is used to reduce the impact of significant wheel track width variations on the stability of the all-terrain vehicle 100 during the traveling of the all-terrain vehicle 100. Specifically, one end of the rear rocker arm 1321 is pivotally connected to the frame 11, and the other end of the rear rocker arm 1321 is pivotally connected to the knuckle 1323. One end of the rear shock absorber 1322 is pivotally connected to the frame 11, and the other end of the rear shock absorber 1322 is pivotally connected to the rear rocker arm 1321. One end of the linkage assembly 1324 is pivotally connected to the frame 11, and the other end of the linkage assembly 1324 is pivotally connected to the knuckle 1323. In this embodiment, a first connecting member 1321a is positioned between the ends of the rear rocker arm 1321. The first connecting member 1321a is used to connect one end of the rear rocker arm 1321 and the rear shock absorber 1322. For the above description, the rear rocker arm 1321 can pivot around the connection point of the rear rocker arm 1321 and the frame 11 during the traveling of the all-terrain vehicle 100. Therefore, the relative positions of the wheel system 12 and the frame 11 can be adjusted; the rear shock absorber 1322 can pivot around the connection point between the rear shock absorber 1322 and the frame 11, and the rear shock absorber 1322 can pivot around the connection point between the rear shock absorber 1322 and the rear rocker arm1321, thereby, the rear shock absorber 1322 can be compressed or elongated to improve the shock absorption of the all-terrain vehicle 100. The linkage assembly 1324 can pivot around the connection point between the linkage assembly 1324 and the frame 11, and the linkage assembly 1324 can pivot around the connection point between the linkage assembly 1324 and the knuckle 1323. The linkage assembly 1324 can reduce the effect of larger wheel track width variations on the all-terrain vehicle 100, that is reducing variations in the positioning parameters of the wheel system 12 improves the handling stability of the all-terrain vehicle 100. Wherein, the positioning parameter of the wheel system 12is the positional relationship of the wheel system 12 relative to the frame 11.

As an embodiment, the linkage assembly 1324 includes a first link 1324a, a second link1324b, and a third link 1324c. Along the front-rear and up-down directions of the all-terrain vehicle 100, the first link 1324a positioned at least partially forward of the second link 1324b and the third link 1324c, and the second link 1324b positioned at least partially upward of the third link 1324c. One end of the first link 1324a is pivotally connected to knuckle 1323, and the other end of the first link 1324a is pivotally connected to the frame 11. One end of the second link 1324b is pivotally connected to knuckle 1323, and the other end of the second link 1324b is pivotally connected to the frame 11. One end of the third link 1324c is pivotally connected to knuckle 1323, and the other end of the third link 1324c is pivotally connected to the frame 11. Specifically, the knuckle 1323 includes a first mounting point 1323a, a second mounting point 1323b, and a third mounting point 1323c. Along the front-rear direction of the all-terrain vehicle 100, the first mounting point 1323a positioned forward of the second mounting point, the first mounting point 1323a positioned forward of the second mounting point, and the second mounting point 1323b positioned upward of the third mounting point 1323c. The first mounting point 1323a is used to connect the first link 1324a, the second mounting point 1323b is used to connect the second link 1324b, and the third mounting point 1323c is used to connect the third link 1324c. In this embodiment, the second link 1324b and the third link 1324c are disposed substantially parallel. During travel of the all-terrain vehicle 100, the large rotation of the rear rocker arm 1321 results in a large variation in the wheelbase of the wheel system 12, affecting the stability of the all-terrain vehicle 100. For the above description, the first link 1324a, the second link 1324b, and the third link 1324c are disposed to increase the fixing points of the wheel system 12 and the frame 11. Controlling the wheel track width variation of the wheel system 12 means controlling the positioning parameters of the wheel system 12, it can improve the operational stability and driving safety of the all-terrain vehicle 100. In addition, a fixing frame of the wheel system 12 is formed by the first link 1324a, the second link 1324b, and the third link 1324c, precisely controlling the suspension system 13 and improving the safety of the all-terrain vehicle 100. In this embodiment, the both ends of the first linkage 1324a, the second linkage 1324b, and the third linkage 1324c are all pivotally connected. Thus, the wheel track width of the wheel system 12 can be controlled without affecting the damping effect of the wheel system 12, i.e., without affecting the damping effect of the rear rocker arm 1321 and the rear shock absorber 1322 on the all-terrain vehicle 100, thereby improving the stability of the all-terrain vehicle 100.

As an embodiment, the linkage assembly 1324 only includes the first link 1324a and the second link1324b, that is, the third link 1324c is omitted. Meanwhile, along the front-rear direction of the all-terrain vehicle 100, the first link 1324a positioned at least partially forward of the second link 1324b. One end of the first link 1324a is pivotally connected to knuckle 1323, and the other end of the first link 1324a is pivotally connected to the frame 11. One end of the second link 1324b is pivotally connected to knuckle 1323, and the other end of the second link 1324b is pivotally connected to the frame 11. Specifically, the knuckle 1323 includes the first mounting point 1323a and the second mounting point 1323b. Along the front-rear direction of the all-terrain vehicle 100, the first mounting point 1323a positioned forward of the second mounting point. The first mounting point 1323a is used to connect the first link 1324a and the knuckle 1323, and the second mounting point 1323b is used to connect the second link 1324b and the knuckle 1323. For the above description, the first link 1324a and the second link 1324b are disposed to increase the fixing points of the wheel system 12 and the frame 11, thereby controlling the wheel track variation of the wheel system 12 to improve the operational stability and driving safety of the all-terrain vehicle 100. In addition, a fixing frame of the wheel system 12 is formed by the first link 1324a and the second link 1324b, thereby precisely controlling the suspension system 13 and improving the safety of the all-terrain vehicle 100.

As an embodiment, the linkage assembly 1324 only includes the first link 1324a and the third link 1324c, that is, the second link 1324b is omitted. Meanwhile, along the front-rear direction of the all-terrain vehicle 100, the first link 1324a positioned at least partially forward of the third link 1324c. One end of the first link 1324a is pivotally connected to knuckle 1323, and the other end of the first link 1324a is pivotally connected to the frame 11. One end of the third link 1324c is pivotally connected to knuckle 1323, and the other end of the third link 1324c is pivotally connected to the frame 11. Specifically, the knuckle 1323 includes the first mounting point 1323a and the third mounting point 1323c. Along the front-rear direction of the all-terrain vehicle 100, the first mounting point 1323a positioned forward of the second mounting point. The first mounting point 1323a is used to connect the first link 1324a and the knuckle 1323, and the third mounting point 1323c is used to connect the third link 1324c and the knuckle 1323. For the above description, the first link 1324a and the third link 1324c are disposed to increase the fixing points of the wheel system 12 and the frame 11, thereby, controlling the wheel track width variation of the wheel system 12 to improve the operational stability and driving safety of the all-terrain vehicle 100. In addition, a fixing frame of the wheel system 12 formed by the first link 1324a and the third link 1324c, thereby precisely controlling the suspension system 13 and improving the safety of the all-terrain vehicle 100.

As shown in FIG.9, as an embodiment, the linkage assembly 1324 includes the second link 1324b and a third link 1324c, that is, the first link 1324a can be removed. Meanwhile, along the up-down direction of the all-terrain vehicle 100, the second link 1324b positioned at least partially upward of the third link 1324c. One end of the second link 1324b is pivotally connected to knuckle 1323, and the other end of the second link 1324b is pivotally connected to the frame 11. One end of the third link 1324c is pivotally connected to knuckle 1323, and the other end of the third link 1324c is pivotally connected to the frame 11. Specifically, the knuckle 1323 includes the second mounting point 1323b and the third mounting point 1323c. Along the up-down direction of the all-terrain vehicle 100, the second mounting point 1323b positioned upward of the third mounting point 1323c. The second mounting point 1323b is used to connect the second link 1324b and the knuckle 1323, and the third mounting point 1323c is used to connect the third link 1324c and the knuckle 1323. For the above description, the second link 1324b and the third link 1324c are disposed to increase the fixing points of the wheel system 12 and the frame 11, thereby controlling the wheel track width variation of the wheel system 12 to improve the operational stability and driving safety of the all-terrain vehicle 100. In addition, a fixing frame of the wheel system 12 formed by the second link and the third link 1324c, thereby precisely controlling the suspension system 13 and improving the safety of the all-terrain vehicle 100.

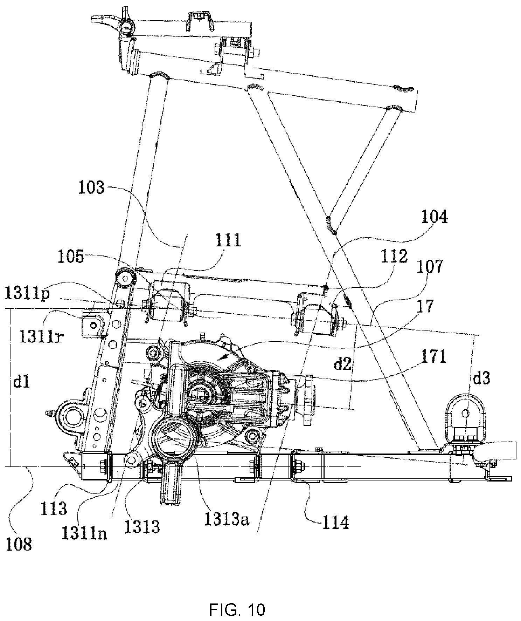

As shown in FIG.10-11, as an embodiment, the upper rocker arm 1311a includes a first rocker arm 1311c and a second rocker arm 1311d, and the lower rocker arm 1311b includes a third rocker arm 1311e and a fourth rocker arm 1311f. The all-terrain vehicle 100 further includes a first state and a second state. The first state is that the all-terrain vehicle 100 is in a stationary state, and the second state is that the all-terrain vehicle 100 is in a traveling state. The front portion of the frame 11 includes a first connecting point 111, a second connecting point 112, a third connecting point 113 and a fourth connecting point 114. A first connection hole 1311p is defined at the end of the first rocker arm 1311c connected to the frame 11. The first connecting point 111 is used to connect with the first connection hole 1311p, to stabilize the connection between the first rocker arm 1311c and the frame 11. A second connection hole 1311q is defined at the end of the second rocker arm 1311d connected to the frame 11. The second connecting point 112 is used to connect with the second connection hole 1311q, to stabilize the connection between the second rocker arm 1311d and the frame 11. The third connecting point 113 is used to connect with the third rocker arm 1311e, to stabilize the connection between the third rocker arm 1311e and the frame 11. The fourth connecting point 114 is used to connect with the fourth rocker arm 1311f, to stabilize the connection between the fourth rocker arm 1311f and the frame 11.

As an embodiment, the all-terrain vehicle 100 includes a first projection plane 101 perpendicular to the left-right direction of the all-terrain vehicle 100 (refer to FIG. 1). A line connecting the center of the first connecting point 111 and the center of the third connecting point 113 is defined as a third straight line 103. A line connecting the center of the second connecting point 112 and the center of the fourth connecting point 114 is defined as a fourth straight line 104. A line connecting the center of the first connecting point 111 and the center of the second connecting point 112 is defined as a fifth straight line 107. A line connecting the center of the third connecting point 113 and the center of the fourth connecting point 114 is defined as a sixth straight line 108. Wherein, the axis of the first connection hole 1311p extends substantially in the direction of a first straight line 1311r. The first straight line 1311r is substantially coincided with the fifth straight line 107. A space formed by the third straight line 103, the fifth straight line 107, the fourth straight line 104 and the sixth straight line 108 is defined as a first space 105. A projection of the first space 105 on the first projection plane 101 in the left-right direction defined as first projection area. The front suspension 131 includes a first support 1313. The first support 1313 includes a first axle bore 1313a connected to the first wheel 121. The center of the first axle bore 1313a and the center of the first wheel 121 are substantially co-linear. A projection of the center of the first axle bore 1313a on the first projection plane 101 in the left-right direction is defined as a first projection point. That means the projection of the center of the first wheel 121 on the first projection plane 101 in the left-right direction is the first projection point. When the all-terrain vehicle 100 is in the first state, the first projection point is located in the first projection area. That means the first projection area covers the first projection point. When the all-terrain vehicle 100 is in the second state, the first projection point can be located outside the first projection area. For the above description, the passability and anti-pitching performance of the all-terrain vehicle 100 can be improved, and the stress on the suspension system 13 can be improved, thereby improving the stability and service life of the all-terrain vehicle 100.

As an embodiment, the rear rocker arm 1321 is substantially the same connection manner in principle as the front rocker arm 1311. Wherein, the rear rocker arm 1321 includes a fifth rocker arm, a sixth rocker arm, a seventh rocker arm, and an eighth rocker arm. The rear portion of the frame 11 includes a fifth connecting point, a sixth connecting point, a seventh connecting point and an eighth connecting point. The fifth connecting point is used to connect the fifth rocker arm. The sixth connecting point is used to connect the sixth rocker arm. The seventh connecting point is used to connect the seventh rocker arm. The eighth connecting point is used to connect the eighth rocker arm. Specifically, a second space is defined by a line connecting the center of the fifth connection point and the center of the seventh connection point, a line connecting the center of the sixth connection point and the center of the eighth connection point, a line connecting the center of the fifth connection point and the center of the sixth connection point, and a line connecting the center of the seventh connection point and the center of the eighth connection point. A projection of the second space on the first projection plane 101 in the left-right direction defined as second projection area. The rear suspension 132 includes a second support. The second support includes a second axle bore connected to the second wheel 122. The center of the second axle bore and the center of the second wheel 122 are substantially co-linear. A projection of the center of the second axle bore on the first projection plane 101 in the left-right direction defined as second projection point. That means the projection of the center of the second wheel 122 on the first projection plane 101 in the left-right direction is the second projection point. When the all-terrain vehicle 100 is in the first state, the second projection point is located in the second projection area. That means the second projection area covers the second projection point. When the all-terrain vehicle 100 is in the second state, the second projection point can be located outside the second projection area. For the above description, the passability and anti-pitching performance of the all-terrain vehicle 100 can be improved, and the stress on the suspension system 13 can be improved, thereby improving the stability and service life of the all-terrain vehicle 100.

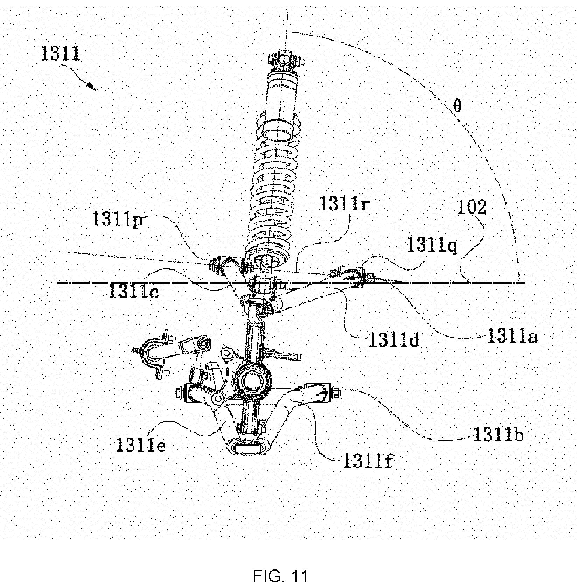

As shown in FIG.11-12, as an embodiment, the suspension system 13 further includes a shock absorber 133. One end of the rear shock absorber 133 is connected to the frame 11, and the other end of the shock absorber 133 is connected to the front rocker arm 1311 or the rear rocker arm, to facilitate the shock absorption of the all-terrain vehicle 100. Specifically, the shock absorber 133 includes a first shock absorber 1312 and a second shock absorber. The first shock absorber 1312 is positioned at the front portion of the frame 11. One end of the first shock absorber 1312 is connected to the frame 11, and the other end of the first shock absorber 1312 is connected to the front rocker arm 1311. The second shock absorber is positioned at the rear portion of the frame 11. One end of the second shock absorber is connected to the frame 11, and the other end of the second shock absorber is connected to the rear rocker arm. In this embodiment, In this embodiment, the first shock absorber 1312 located on the left side of the all-terrain vehicle 100 is used as an example, and the first shock absorber 1312 located on the left side of the all-terrain vehicle 100 is a third shock absorber 1312c The third shock absorber 1312c extends substantially along the direction of the eighth straight line 1312d. The all-terrain vehicle includes a first projection plane 101 perpendicular to the left-right direction, a second projection plane 102 perpendicular to the up-down direction, and a third projection plane 106 perpendicular to the front-rear direction. A projection of the second projection plane 102 on the first projection plane 101 in the left-right direction is defined as second projection line. A projection of the eighth straight line 1312d on the first projection plane 101 in the left-right direction is defined as a fifth projection line. An angle θ defined by the second projection line and the fifth projection line is in the range from 60° to 110°. Specifically, the angle θ is in the range from 65° to 105°. In this embodiment, the angle θ is in the range from 70° to 100°. For the above description, the operational stability of the all-terrain vehicle 100 can be improved, the space utilization of the all-terrain vehicle 100 can be improved, thereby making the structure of the all-terrain vehicle 100 more stable and improving the safety of the all-terrain vehicle 100. A projection of the eighth straight line 1312d on the projection plane 106 in the front-rear direction defined as sixth projection line. A projection of the second projection plane 102 on the third projection plane 106 in the front-rear direction is defined as seventh projection line. An angle γ defined by the sixth projection line and the seventh projection line is in the range from 40° to 90°. Specifically, the angle γ is in the range from 45° to 85°. In this embodiment, the angle γ is in the range from 50° to 80°. For the above description, the compression stroke of the third shock absorber 1312c can be kept in a reasonable range, which is beneficial for the design and processing of the third shock absorber 1312c, thereby improving the processing efficiency of the all-terrain vehicle 100.

It should be noted that the first shock absorber 1312 located on the right side of the all-terrain vehicle 100 is provided in substantially the same manner as the third shock absorber 1312c, and the second shock absorber is provided in substantially the same manner as the third shock absorber 1312c.

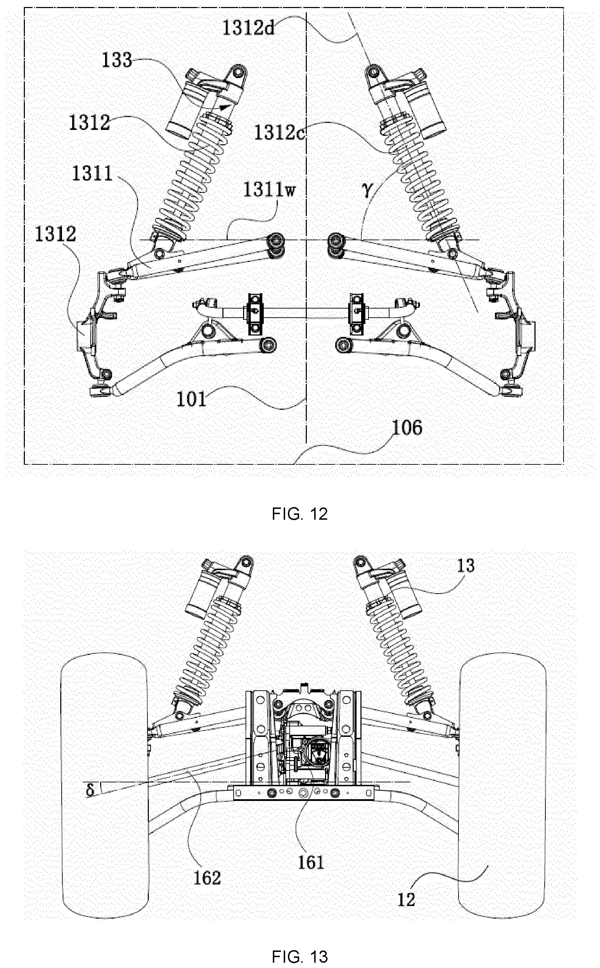

As shown in FIG.13, as an embodiment, the transmission system includes a drive axle 161 and a drive shaft 162. The drive axle 161 is used to provide power to the drive shaft 162. One end of the drive shaft 162 is connected to the wheel system 12, and the other end of the drive shaft 162 is connected to the drive axle 161, so that the drive shaft 162 is used to drive the wheel system 12. When the all-terrain vehicle 100 is a front wheel drive vehicle, the drive axle 161 is positioned at the front portion of the frame 11. One end of the drive shaft 162 is connected to the drive axle 161, and the other end of the drive shaft 162 is connected to the first wheel system 121. When the all-terrain vehicle 100 is a rear wheel drive vehicle, the drive axle 161 is positioned at the rear portion of the frame 11. One end of the drive shaft 162 is connected to the drive axle 161, and the other end of the drive shaft 162 is connected to the second wheel system 122. When the all-terrain vehicle 100 is an all-wheel drive vehicle, the drive shaft 162 includes a first shaft and a second shaft, and the drive axle 161 includes a first axle and a second axle. The first axle is positioned at the front portion of the frame 11. One end of the first shaft is connected to the first axle, and the other end of the first shaft is connected to the first wheel system 121. The second axle is positioned at the rear portion of the frame 11. One end of the second shaft is connected to the second axle, and the other end of the second shaft is connected to the second wheel system 122.

As an embodiment, the all-terrain vehicle includes a second projection plane 102 perpendicular to the up-down direction, and a third projection plane 106 perpendicular to the front-rear direction. A projection of the axis of the drive shaft 162 on the third projection plane 106 in the front-rear direction is defined as eighth projection line. A projection of the second projection plane 102 on the third projection plane 106 in the front-rear direction is defined as ninth projection line. An acute angle defined by the eighth projection line and ninth projection line defined as angle δ. The angle δ is in the range from 0° to 60°. Specifically, the angle δ is in the range from 0° to 45°. In this embodiment, the angle δ is in the range from 0° to 30°. For the above description, the transmission efficiency of the transmission system 16 can be improved, the vibration damping performance of the suspension system 13 can be improved.

As an embodiment, when the all-terrain vehicle 100 is a front wheel drive vehicle, the drive axle 161 is positioned at the front portion of the frame 11. The third rocker arm 1311e includes a fifth connection hole 1311n positioned at the end of the third rocker arm 1311e and connected to the frame 11 (refer to FIG. 10). The axis of the fifth connection hole 1311n is extended substantially in the front-rear direction of the all-terrain vehicle 100. Wherein, the axis of the fifth connection hole 1311n is substantially coincided with the sixth straight line 108. The axis of the first connection hole 1311p is extended substantially in the direction of a first straight line 1311r. The first connection hole 1311p includes a centerline 1311w that is extended in the left-right direction (refer to FIG. 12), and the first connection hole 1311p is disposed substantially symmetrical relative to the centerline 1311w. Along the left-right directions of the all-terrain vehicle 100, a projection of the first straight line 1311r on the first projection plane 101 is defined as first projection line. A projection of the center of the first axle bore 1313a on the first projection plane 101 defined as first projection point, that means the projection of the center of the first wheel 121 on the first projection plane 101 is the first projection point. A projection of the output center of the drive axle 161 on the first projection plane 101 defined as third projection point. A projection of the axis of the fifth connection hole 1311n on the first projection plane 101 defined as fourth projection line. A projection of the centerline 1311w of the first connection hole 1311p on the first projection plane 101 defined as fourth projection point. Wherein, the output center of the drive axle 161 refers to the center of the connection between the drive axle 161 and the drive shaft 162. A distance between the fourth projection point and the fourth projection defined line as d1. A distance between the third projection point and the first projection line defined as d1. A distance between the first projection point and the first projection line defined as d3. A ratio of d2 to d1 is in the range from 0.1 to 0.8. A ratio of d3 to d1 is in the range from 0.5 to 1. Specifically, a ratio of d2 to d1 is in the range from 0.2 to 0.7. A ratio of d3 to d1 is in the range from 0.6 to 0.9. For the above description, the transmission efficiency of the transmission system 16 can be improved, the vibration damping performance of the suspension system 13 can be improved. In this embodiment, the third projection point positioned between the first projection line and the fourth projection line. That means, along the up-down direction of the all-terrain vehicle 100, the output center of the drive axle 161 is below a line connecting the first connecting point 111 and the second connecting point 112, and the output center of the drive axle 161 is above a line connecting the third connecting point 113 and the fourth connecting point 114. Therefore, the position of the output center of the drive axle 161 relative to the front rocker arm 1311 is limited, thereby improving the transmission efficiency of the transmission system 16, and improving the vibration damping performance of the suspension system 13.

As an embodiment, When the all-terrain vehicle 100 is in the first state, the third projection point is located in the first projection area, that is, the first projection area covers the first projection point. When the all-terrain vehicle 100 is in the second state, the third projection point can be located outside the first projection area. Specifically, along the up-down direction of the all-terrain vehicle 100, the third projection point positioned above the first projection point. That means, along the up-down direction of the all-terrain vehicle 100, the output center of the drive axle 161 is above the center of the first shaft bore 1313a.

When the all-terrain vehicle 100 is a rear wheel drive vehicle, the drive axle 161 is positioned at the rear portion of the frame 11, and the positional relationship of the drive axle 161 on the rear side of the frame 11 is substantially the same as the positional relationship of the drive axle 161 on the front side of the frame 11. Specifically, the seventh rocker arm includes a sixth connection hole that is defined at the end of the seventh rocker arm connected to the frame 11. The axis of the sixth connection hole is extended substantially in the front-rear direction of the all-terrain vehicle 100. The axis of the third connection hole is extended substantially in the direction of the second straight line. The output center of the drive axle 161 is located at least partially between the axis of the sixth connection hole and the second straight line. And along the up-down direction of the all-terrain vehicle 100, the output center of the drive axle 161 is above the center of the second shaft bore. When the all-terrain vehicle 100 is in the first state, the projection of the output center of the drive axle 161 on the first projection plane 101 in the left-right direction is located in the second projection area. When the all-terrain vehicle 100 is in the second state, the projection of the output center of the drive axle 161 on the first projection plane 101 in the left-right direction can be located outside the second projection area.

When the all-terrain vehicle 100 is an all-wheel drive vehicle, the first axle is positioned in substantially the same relationship as the drive axle 161 on the front side of the frame 11, and the second axle is positioned in substantially the same relationship as the drive axle 161 on the rear side of the frame 11.

The above descriptions of the disclosed embodiment express only several embodiments of the application, which are described in a more specific and detailed manner, and are not to be construed as a limitation on the scope of protection of the patent. It should be noted that the professional and technical personnel in the art can make deformations and improvements without departing from the conception of the present application, all of which fall within the scope of protection of the present application. Therefore, the scope of protection of this application shall be subject to the attached claims.

## Claims

1. An all-terrain vehicle, comprising:
a frame;
a wheel system comprising a first wheel and a second wheel;
a suspension system comprising a front suspension and a rear suspension, the first wheel connected to the frame by the front suspension and the second wheel connected to the frame by the rear suspension;
a vehicle cover at least partially disposed on the frame;
a prime mover assembly at least partially disposed on the frame;
a transmission system connected to the wheel system and the prime mover assembly, and the transmission system comprising a drive axle and a drive shaft;
defining a projection plane perpendicular to the left-right direction of the all-terrain vehicle as a first projection plane, defining a projection plane perpendicular to the up-down direction of the all-terrain vehicle as a second projection plane, and defining a projection plane perpendicular to the front-rear direction of the all-terrain vehicle as a third projection plane;
defining a projection of the output center of the drive axle on the first projection plane along the left-right direction as a first projection point, defining a projection of the center of the wheel system on the first projection plane along the left-right direction as a second projection point, the first projection point being located above the second projection point;
defining a projection of the axis of the drive shaft on the third projection plane along the front-rear direction as a first projection line; defining a projection of the second projection plane on the third projection plane in the front-rear direction as a second projection line; an angle defined between the first projection line and the second projection line being in the range from 0° to 60°;
the front suspension comprising:
an upper rocker arm, comprising a first mounting point defined at one end of the upper rocker arm, and a second mounting point defined at the other end of the upper rocker arm;
a lower rocker arm, comprising a third mounting point defined at one end of the lower rocker arm, and a fourth mounting point defined at the other end of the lower rocker arm;
defining a distance between the first mounting point and the second mounting point as L1, defining a distance between the third mounting point and the fourth mounting point as L2, a ratio of L1 to L2 is in the range from 0.5 to 1.15.

2. The all-terrain vehicle according to claim 1, wherein the angle defined by the first projection line and the second projection line is in the range from 0° to 30°.

3. The all-terrain vehicle according to claim 1, wherein the rear suspension further comprises an upper rocker arm and a lower rocker arm, the upper rocker arm defines a first connection hole for connecting to the frame, the axis of the first connection hole extending substantially along a direction of a first straight line;
the lower rocker arm comprises a second connection hole for connecting to the frame, the axis of the second connection hole extended substantially along the front-rear direction of the all-terrain vehicle; defining a projection of the first straight line on the first projection plane in the left-right direction as a third projection line, defining a projection of the axis of the second connection hole on the first projection plane in the left-right direction as a fourth projection line, the first projection point is positioned between the third projection line and the fourth projection line.

4. The all-terrain vehicle according to claim 3, wherein the first connection hole comprises a centerline extending along the left-right direction, the first connection hole is substantially symmetrical relative to the centerline; defining a projection of the centerline on the first projection plane along the left-right direction as a third projection point, defining a distance between the third projection point and the second projection line as d1, defining a distance between the first projection point and the first projection line as d2, a ratio of d2 to d1 is in the range from 0.1 to 0.8.

5. The all-terrain vehicle according to claim 4, wherein a ratio of d2 to d1 is in the range from 0.2 to 0.7.

6. The all-terrain vehicle according to claim 4, wherein, defining a distance between the second projection point and the first projection line as d3, a ratio of d3 to d1 is in the range from 0.5 to 1.

7. The all-terrain vehicle according to claim 6, wherein, a ratio of d3 to d1 is in the range from 0.6 to 0.9.

8. The all-terrain vehicle according to claim 3, wherein, the upper rocker arm comprises a first rocker arm and a second rocker arm, the lower rocker arm comprises a third rocker arm and a fourth rocker arm, the frame comprises a first connecting point, a second connecting point, a third connecting point, and a fourth connecting point, the first rocker arm connected to the frame by the first connecting point, the second rocker arm connected to the frame by the second connecting point, the third rocker arm connected to the frame by the third connecting point, and the fourth rocker arm connected to the frame by the fourth connecting point.

9. The all-terrain vehicle according to claim 8, wherein defining a line connecting the center of the first connecting point and the center of the third connecting point as a second straight line, defining a line connecting the center of the second connecting point and the center of the third connecting point as a third straight line, defining a line connecting the center of the first connecting point and the center of the second connecting point as a fourth straight line, defining a line connecting the center of the third connecting point and the center of the fourth connecting point as a fifth straight line; defining a space defined by the second straight line, the third straight line, the fourth straight line and the fifth straight line as a first space, defining a projection of the first space on the first projection plane in the left-right direction as a first projection area, when the all-terrain vehicle is in the stationary state, the first projection point is located in the first projection area.

10. The all-terrain vehicle according to claim 9, wherein the second projection point is located in the first projection area.

11. The all-terrain vehicle according to claim 1, wherein a ratio of L1 to L2 is in the range from 0.6 to 1.1.

12. The all-terrain vehicle according to claim 11, wherein a ratio of L1 to L2 is in the range from 0.7 to 1.

13. The all-terrain vehicle according to claim 1, wherein the suspension system further comprises a knuckle for connecting the front suspension and the first wheel; one end of the upper rocker arm is connected to the frame by the first connecting point, and the other end of the upper rocker arm is connected to the frame by the second connecting point, one end of the lower rocker arm is connected to the frame by the third connecting point, and the other end of the lower rocker arm is connected to the frame by the fourth connecting point.

14. The all-terrain vehicle according to claim 13, wherein the knuckle comprises a first connecting portion connected to the upper rocker arm and a second connecting portion connected to the lower rocker arm.

15. The all-terrain vehicle according to claim 14, wherein the knuckle further comprises a connecting member positioned between the first connecting portion and the upper rocker arm, the first connecting portion and the upper rocker arm are connected by the connecting member.

16. The all-terrain vehicle according to claim 15, wherein the knuckle further comprises an adjusting spacer positioned between the first connecting portion and the connecting member.

17. The all-terrain vehicle according to claim 16, wherein one side of the adjusting spacer abuts against the first connecting portion, and the other side of the adjusting spacer abuts against the connecting member.

18. The all-terrain vehicle according to claim 1, wherein the vehicle cover comprises a lampshade positioned at the front portion of the frame,
the front suspension comprises a first shock absorber and a front rocker arm, one end of the first shock absorber defines a first mounting point, the first shock absorber attached to the frame by the first mounting point, and the other end of the first shock absorber attached to the front rocker arm;
the front rocker arm comprises an upper rocker arm, one end of the upper rocker arm defines a second mounting point, the other end of the upper rocker arm defines and a third mounting point; defining a first straight line extended in the up-down direction and a second straight line extended in the up-down direction, the first straight line passing through the second mounting point, and the second straight line passing through the third mounting point;
within a projection plane perpendicular to the front-rear direction of the all-terrain vehicle, defining a projection of the upper edge of the lampshade on the projection plane in the front-rear direction as first projection line, defining a projection of the axis of the upper rocker arm on the projection plane in the front-rear direction as a second projection line, defining a projection of the first straight line on the projection plane in the front-rear direction as a third projection line, defining a projection of the second straight line on the projection plane in the front-rear direction as a fourth projection line, a projection area is defined by the first projection line, the second projection line, the third projection line, and the fourth projection line, defining a projection of the first mounting point on the projection plane in the front-rear direction as second projection area, the second projection area is located in the first projection area.

19. The all-terrain vehicle according to claim 18, wherein the suspension system comprises a knuckle, one end of the upper rocker arm is connected to the knuckle by the second connecting point, and the other end of the upper rocker arm is connected to the frame by the third connecting point.

20. The all-terrain vehicle according to claim 18, wherein the upper rocker arm is positioned below the lampshade.

21. The all-terrain vehicle according to claim 18, wherein the first shock absorber is connected to a fourth mounting point defined at one end of the front rocker arm, the front rocker arm further comprises a lower rocker arm, comprising a fifth mounting point defined at one end of the lower rocker arm, and a sixth mounting point defined at the other end of the lower rocker arm; defining a third straight line extending in the up-down direction and a fourth straight line extending in the up-down direction, the third straight line passing through the fifth mounting point, the fourth straight line passing through the sixth mounting point; defining a fifth straight line parallel to the axis of the upper rocker arm, the fifth straight line located above the axis of the upper rocker arm; defining a projection of the axis of the lower rocker arm on the projection plane in the front-rear direction as a fifth projection line, defining a projection of the third straight line on the projection plane in the front-rear direction as a sixth projection line, defining a projection of the fourth straight line on the projection plane in the front-rear direction as a seventh projection line, defining a projection of the fifth straight line on the projection plane in the front-rear direction as an eighth projection line, a third projection area defined by the fifth projection line, the sixth projection line, the seventh projection line, and the eighth projection line, defining a projection of the fourth mounting point on the projection plane in the front-rear direction as a fourth projection area, the fourth projection area is located within the third projection area.

22. The all-terrain vehicle according to claim 21, wherein defining a distance between the second projection line and the eighth projection line as a L, and L is in the range from 0 mm to 50 mm.

23. The all-terrain vehicle according to claim 21, wherein the suspension system comprises a knuckle, one end of the lower rocker arm connected to the frame by the fifth connecting point, and the other end of the lower rocker arm connected to the frame by the sixth connecting point.

24. The all-terrain vehicle according to claim 21, wherein when the lower rocker arm is a straight tube, the axis of the lower rocker arm is the axis of the straight tube.

25. The all-terrain vehicle according to claim 21, wherein when the lower rocker arm is a bent tube, the axis of the lower rocker arm is the line passing the fifth mounting point and the sixth mounting point.

26. The all-terrain vehicle according to claim 21, wherein the first mounting point is connected to the frame by a connecting member, the fourth mounting point is connected to the front rocker arm by the connecting member.

27. A all-terrain vehicle, comprising:
a frame
a wheel system comprising a first wheel and a second wheel;
a suspension system comprising a front suspension and a rear suspension; the first wheel connected to the frame by the front suspension and the second wheel connected to the frame by the rear suspension;
a prime mover assembly at least partially disposed on the frame;
a transmission system connected to the wheel system and the prime mover assembly and the transmission system comprising a drive axle and a drive shaft;
defining a projection plane perpendicular to the left-right direction of the all-terrain vehicle as a first projection plane, defining a projection plane perpendicular to the up-down direction of the all-terrain vehicle as a second projection plane, defining a projection plane perpendicular to the front-rear direction of the all-terrain vehicle as a third projection plane;
defining a projection of the output center of the drive axle on the first projection plane in the left-right direction as a first projection point, defining a projection of the center of the wheel system on the first projection plane in the left-right direction as a second projection point, the first projection point located above the second projection point;
defining a projection of the axis of the drive shaft on the third projection plane in the front-rear direction as a first projection line; defining a projection of the second projection plane on the third projection plane in the front-rear direction as a second projection line; an angle defined by the first projection line and the second projection line is in the range from 0° to 60°.

28. The all-terrain vehicle according to claim 27, wherein an angle defined by the first projection line and the second projection line is in the range from 0° to 30°.

29. The all-terrain vehicle according to claim 27, wherein the rear suspension further comprises an upper rocker arm and a lower rocker arm, the upper rocker arm defines a first connection hole connected to the frame, the axis of the first connection hole extends substantially in the direction of a first straight line;
the lower rocker arm defines a second connection hole connected to the frame, the axis of the second connection hole extends substantially in the front-rear direction of the all-terrain vehicle; defining a projection of the first straight line on the first projection plane in the left-right direction as a third projection line, defining a projection of the axis of the second connection hole on the first projection plane in the left-right direction as a fourth projection line, the first projection point positioned between the third projection line and the fourth projection line.

30. The all-terrain vehicle according to claim 29, wherein the first connection hole comprises a centerline extending in the left-right direction, the first connection hole disposed substantially symmetrical relative to the centerline; defining a projection of the centerline on the first projection plane in the left-right direction as a third projection point, defining a distance between the third projection point and the second projection line as d1, defining a distance between the first projection point and the first projection line as d2, a ratio of d2 to d1 is in the range from 0.1 to 0.8.

31. The all-terrain vehicle according to claim 30, wherein a ratio of d2 to d1 is in the range from 0.2 to 0.7.

32. The all-terrain vehicle according to claim 30, wherein defining a distance between the second projection point and the first projection line as d3, a ratio of d3 to d1 is in the range from 0.5 to 1.

33. The all-terrain vehicle according to claim 32, wherein a ratio of d3 to d1 is in the range from 0.6 to 0.9.

34. The all-terrain vehicle according to claim 29, wherein the upper rocker arm comprises a first rocker arm and a second rocker arm, the lower rocker arm comprises a third rocker arm and a fourth rocker arm, the frame comprises a first connecting point, a second connecting point, a third connecting point, and a fourth connecting point, the first rocker arm is connected to the frame by the first connecting point, the second rocker arm is connected to the frame by the second connecting point, the third rocker arm is connected to the frame by the third connecting point, the fourth rocker arm is connected to the frame by the fourth connecting point.

35. The all-terrain vehicle according to claim 34, wherein, defining a line connecting the center of the first connecting point and the center of the third connecting point as a second straight line, defining a line connecting the center of the second connecting point and the center of the third connecting point as a third straight line, defining a line connecting the center of the first connecting point and the center of the second connecting point as a fourth straight line, defining a line connecting the center of the third connecting point and the center of the fourth connecting point as a fifth straight line; a space defined by the second straight line, the third straight line, the fourth straight line and the fifth straight line is defined as a first space, defining a projection of the first space on the first projection plane in the left-right direction as a first projection area, when the all-terrain vehicle is in the stationary state, the first projection point is located in the first projection area.

36. The all-terrain vehicle according to claim 35, wherein the second projection point is located in the first projection area.

37. The all-terrain vehicle according to claim 27, wherein the first wheel comprises a first front wheel and a second front wheel, the second wheel comprises a first rear wheel and a second rear wheel; the first front wheel and the first rear wheel located on the left side of the all-terrain vehicle, the second front wheel and the second rear wheel located on the right side of the all-terrain vehicle; defining a distance between a left end surface of the first front wheel and a right end surface of the second front wheel as D1, defining a distance between a left end surface of the first rear wheel and a right end surface of the second rear wheel as D2, a ratio of D1 to D2 is in the range from 0.8 to 1.5.

38. The all-terrain vehicle according to claim 37, wherein, a ratio of D1 to D2 is in the range from 0.9 to 1.4.

39. The all-terrain vehicle according to claim 38, wherein, a ratio of D1 to D2 is in the range from 1 to 1.3.

40. The all-terrain vehicle according to claim 37, wherein the left end surface of the first front wheel, the right end surface of the second front wheel, the left end surface of the first rear wheel, and right end surface of the second rear wheel are all disposed substantially perpendicular to the left-right direction.

41. The all-terrain vehicle according to claim 37, wherein the first front wheel comprises a first symmetry plane perpendicular to the left-right direction, the second front wheel comprises a second symmetry plane perpendicular to the left-right direction, the first rear wheel comprises a third symmetry plane perpendicular to the left-right direction, the second rear wheel comprises a fourth symmetry plane perpendicular to the left-right direction, defining a distance between the first symmetry plane and the second symmetry plane as D3, defining a distance between the third symmetry plane and the fourth symmetry plane as D4, a ratio of D3 to D4 is in the range from 0.8 to 1.3.

42. The all-terrain vehicle according to claim 41, wherein a ratio of D3 to D4 is in the range from 0.9 to 1.2.

43. The all-terrain vehicle according to claim 41, wherein the first front wheel is substantially symmetrical relative to the first symmetry plane, the second front wheel is substantially symmetrical relative to the second symmetry plane, the first rear wheel is substantially symmetrical relative to the third symmetry plane, the second rear wheel is substantially symmetrical relative to the fourth symmetry plane.

44. The all-terrain vehicle according to claim 37, wherein, the first front wheel, the second front wheel, the first rear wheel, and the second rear wheel all extended substantially in the front-rear direction of the all-terrain vehicle.

45. The all-terrain vehicle according to claim 37, wherein the frame has a lowest point S1 in the up-down direction of the all-terrain vehicle, the wheel system in contact with the ground is a horizontal plane, defining a distance between the S1 and the horizontal plane as H, defining a radius of the wheel system as R, a ratio of R to H is in the range from 0.9 to 1.4.

46. The all-terrain vehicle according to claim 27, wherein the frame further comprises a lowest point S1 in the up-down direction of the all-terrain vehicle, the wheel system in contact with the ground is a horizontal plane, defining a distance between the S1 and the horizontal plane as H, defining a radius of the wheel system as R, a ratio of R to H is in the range from 0.9 to 1.4.

47. The all-terrain vehicle according to claim 46, wherein a ratio of R to H is in the range from 1 to 1.3.

48. The all-terrain vehicle according to claim 46, wherein, R is the radius of the first wheel or the radius of the second wheel.

49. The all-terrain vehicle according to claim 46, wherein S1 is a point positioned on the surface of the lowest end of the frame.

50. The all-terrain vehicle according to claim 46, wherein the first wheel comprises a first front wheel and a second front wheel, the second wheel comprises a first rear wheel and a second rear wheel; the first front wheel and the first rear wheel located on the left side of the all-terrain vehicle, the second front wheel and the second rear wheel located on the right side of the all-terrain vehicle; defining a distance between a left end surface of the first front wheel and a right end surface of the second front wheel as D1, defining a distance between a left end surface of the first rear wheel and a right end surface of the second rear wheel as D2, a ratio of D1 to D2 is in the range from 0.8 to 1.5.

51. The all-terrain vehicle according to claim 50, wherein a ratio of D1 to D2 is in the range from 0.9 to 1.4.

52. The all-terrain vehicle according to claim 50, wherein, the left end surface of the first front wheel, the right end surface of the second front wheel, the left end surface of the first rear wheel, and right end surface of the second rear wheel are all disposed substantially perpendicular to the left-right direction.

53. The all-terrain vehicle according to claim 50, wherein the first front wheel comprises a first symmetry plane perpendicular to the left-right direction, the second front wheel comprises a second symmetry plane perpendicular to the left-right direction, the first rear wheel comprises a third symmetry plane perpendicular to the left-right direction, the second rear wheel comprises a fourth symmetry plane perpendicular to the left-right direction, defining a distance between the first symmetry plane and the second symmetry plane as D3, defining a distance between the third symmetry plane and the fourth symmetry plane as D4, a ratio of D3 to D4 is in the range from 0.8 to 1.3.

54. The all-terrain vehicle according to claim 27, wherein the rear suspension comprising:
a knuckle at least partially coupled to the wheel system;
a rear rocker arm, one end of the rear rocker arm pivotally connected to the frame, and the other end of the rear rocker arm pivotally connected to the knuckle;
a linkage assembly, one end of the linkage assembly pivotally connected to the knuckle, and the other end of the linkage assembly pivotally connected to the frame;
the linkage assembly forms a fixing frame, the suspension system controlling the wheel track variation of the wheel system by the fixing frame.

55. The all-terrain vehicle according to claim 54, wherein the linkage assembly comprises a first link, a second link, and a third link, the first link positioned at least partially forward of the second link; the first link positioned at least partially forward of the third link and the second link positioned at least partially upward of the third link; one end of the first link pivotally connected to the frame, and the other end of the first link pivotally connected to the knuckle; one end of the second link pivotally connected to the frame, and the other end of the second link pivotally connected to the knuckle; one end of the third link pivotally connected to the frame, and the other end of the third link pivotally connected to the knuckle.

56. The all-terrain vehicle according to claim 54, wherein the linkage assembly comprises a first link and a second link, the first link positioned at least partially forward of the second link; one end of the first link pivotally connected to the frame, and the other end of the first link pivotally connected to the knuckle; one end of the second link pivotally connected to the frame, and the other end of the second link pivotally connected to the knuckle.

57. The all-terrain vehicle according to claim 54, wherein the linkage assembly comprises a second link and a third link, the second link positioned at least partially upward of the third link; one end of the second link pivotally connected to the frame, and the other end of the second link pivotally connected to the knuckle; one end of the third link pivotally connected to the frame, and the other end of the third link pivotally connected to the knuckle.

58. The all-terrain vehicle according to claim 54, wherein the rear suspension further comprises a rear shock absorber, one end of the rear shock absorber pivotally connected to the rear rocker arm, and the other end of the rear shock absorber pivotally connected to the frame; a connecting member positioned between the two ends of the rear rocker arm, the rear shock absorber pivotally connected to the rear rocker arm by the connecting member.

59. The all-terrain vehicle according to claim 54, wherein the knuckle comprises a mounting point, the knuckle connected to the linkage assembly by the mounting point.

60. A all-terrain vehicle, comprising:
a frame;
a wheel system comprising a first wheel and a second wheel;
a suspension system comprising a front suspension and a rear suspension; the first wheel connected to the frame by the front suspension and the second wheel connected to the frame by the rear suspension;
a prime mover assembly, at least partially disposed on the frame;
a transmission system, connected to the wheel system and the prime mover assembly, and the transmission system comprises a drive axle and a drive shaft;
defining a projection plane perpendicular to the left-right direction of the all-terrain vehicle as first projection plane, defining a projection plane perpendicular to the up-down direction of the all-terrain vehicle as second projection plane defining a projection plane perpendicular to the front-rear direction of the all-terrain vehicle as third projection plane;
defining a projection of the output center of the drive axle on the first projection plane in the left-right direction as first projection point, defining a projection of the center of the wheel system on the first projection plane in the left-right direction as second projection point, the first projection point located above the second projection point;
defining a projection of the axis of the drive shaft on the third projection plane in the front-rear direction as first projection line, defining a projection of the second projection plane on the third projection plane in the front-rear direction as second projection line, an angle defined by the first projection line and the second projection line is in the range from 0° to 60°;
the wheel system comprises a first position at the highest point of the upward hopping, a second position at a lowest point of a downward hopping, and an initial position at rest; defining a maximum distance between the first position and the initial position as L1, defining a maximum distance between the second position and the initial position defined as L2, a ratio of L1 to L2 is in the range from 1 to 10.

61. The all-terrain vehicle according to claim 60, wherein an angle defined by the first projection line and the second projection line is in the range from 0° to 30°.

62. The all-terrain vehicle according to claim 60, wherein the front suspension and the rear suspension further comprises the upper rocker arm and the lower rocker arm, the upper rocker arm comprising a first connection hole connected to the frame, the axis of the first connection hole extended substantially in the direction of a first straight line;
the lower rocker arm comprises a second connection hole for connecting to the frame, the axis of the second connection hole extending substantially in the front-rear direction of the all-terrain vehicle; defining a projection of the first straight line on the first projection plane in the left-right direction as a third projection line, defining a projection of the axis of the second connection hole on the first projection plane in the left-right direction as a fourth projection line, the first projection point is positioned between the third projection line and the fourth projection line.

63. The all-terrain vehicle according to claim 62, wherein the first connection hole comprising a centerline extended in the left-right direction, the first connection hole disposed substantially symmetrical relative to the centerline; defining a projection of the centerline on the first projection plane in the left-right direction as third projection point, defining a distance between the third projection point and the second projection line as d1, defining a distance between the first projection point and the first projection line as d2, a ratio of d2 to d1 is in the range from 0.1 to 0.8.

64. The all-terrain vehicle according to claim 63, wherein a ratio of d2 to d1 is in the range from 0.2 to 0.7.

65. The all-terrain vehicle according to claim 63, wherein defining a distance between the second projection point and the first projection line as d3, a ratio of d3 to d1 is in the range from 0.5 to 1.

66. The all-terrain vehicle according to claim 65, wherein a ratio of d3 to d1 is in the range from 0.6 to 0.9.

67. The all-terrain vehicle according to claim 62, wherein the upper rocker arm comprising a first rocker arm and a second rocker arm, the frame comprises a first connecting point, a second connecting point, a third connecting point, and a fourth connecting point, the first rocker arm is connected to the frame by the first connecting point, the second rocker arm is connected to the frame by the second connecting point, the third rocker arm is connected to the frame by the third connecting point, the fourth rocker arm is connected to the frame by the fourth connecting point.

68. The all-terrain vehicle according to claim 67, wherein defining a line connecting the center of the first connecting point and the center of the third connecting point as a second straight line, defining a line connecting the center of the second connecting point and the center of the third connecting point as a third straight line, defining a line connecting the center of the first connecting point and the center of the second connecting point as a fourth straight line, defining a line connecting the center of the third connecting point and the center of the fourth connecting point as a fifth straight line; defining a space defined by the second straight line, the third straight line, the fourth straight line and the fifth straight line as a first space, defining a projection of the first space on the first projection plane in the left-right direction as a first projection area, when the all-terrain vehicle is in the stationary state, the first projection point is located within the first projection area.

69. The all-terrain vehicle according to claim 68, wherein the second projection point is located within the first projection area.

70. The all-terrain vehicle according to claim 60, wherein a ratio of L1 to L2 is in the range from 2 to 9.

71. The all-terrain vehicle according to claim 60, wherein a ratio of L1 to L2 is in the range from 3 to 8.

72. The all-terrain vehicle according to claim 60, wherein defining a maximum distance between the first position and the second position as L3, the front suspension comprising a first shock absorber, defining a stroke of the first shock absorber as L4, a ratio of L3 to L4 is in the range from 1.1 to 2.

73. The all-terrain vehicle according to claim 72, wherein a ratio of L3 to L4 is in the range from 1.2 to 1.9.

74. The all-terrain vehicle according to claim 73, wherein a ratio of L3 to L4 is in the range from 1.3 to 1.8.

75. The all-terrain vehicle according to claim 72, wherein the rear suspension further comprises a second shock absorber, defining a ratio of the stroke of the second shock absorber to L3 defined as a first ratio, defining a ratio of the L3 to L4 as a second ratio, the first ratio and second ratio are equal.

76. The all-terrain vehicle according to claim 60, wherein defining a line connecting a left wheel center and a right wheel center when the wheel system is in the first position as a first wheel line, defining a line connecting a left wheel center and a right wheel center when the wheel system is in the initial position as a second wheel line, defining a distance between the first wheel line and the second wheel line as L1.

77. The all-terrain vehicle according to claim 76, wherein defining a line connecting a left wheel center and a right wheel center when the wheel system is in the second position as a third wheel line, defining a distance between the second wheel line and the third wheel line as a L2.

78. The all-terrain vehicle according to claim 77, wherein, the left and right wheel centers refer to the wheel centers of the left and right wheels of the first wheel or the second wheel.

79. The all-terrain vehicle according to claim 60, wherein the suspension system further comprises a knuckle, the knuckle comprising:
a body, one end of the body defined as first connecting portion;
a connecting member coupled to the first connecting portion;
an adjusting spacer positioned between the first connecting portion and the connecting member;
the first connecting portion comprising a first end face and a second end face, the first end face and the second end face arranged substantially symmetrical relative to the end face of the first connecting portion; the adjusting spacer attached to the first end face or the second end face;
along the direction perpendicular to the end face, defining a projection of the adjusting spacer on the end face as a projection area, the area of the projection area is less than or equal to one-half of the end face area.

80. The all-terrain vehicle according to claim 79, wherein the first connecting portion comprises a plurality of first connection holes, centers of the plurality of first connection holes are substantially in the same straight line.

81. The all-terrain vehicle according to claim 80, wherein, defining a line connecting the centers of the plurality of first connection holes as first straight line, the end face be divided into the first end face and the second end face by the first straight line, the first end face at least partially positioned above the second end face; the projection area may substantially coincide with the first end face, the projection area may substantially coincide with the second end face.

82. The all-terrain vehicle according to claim 80, wherein the adjusting spacer comprises a plurality of first half-holes, the connecting member comprises a plurality of second connection holes, the center of the first connection hole, the center of the first half-hole, and the center of the second connection hole are substantially co-linear; the first connection hole, the first half-hole, and the second connection hole are sequentially connected by the same fixing member; the adjusting spacer comprises a slot, a plurality of first half-holes are positioned on either side of the slot; the opening of slot is substantially downwardly along the up-down direction of the all-terrain vehicle.

83. The all-terrain vehicle according to claim 79, wherein the knuckle is positioned on the front portion and/or rear portion of the frame, when the knuckle is positioned on the rear portion of the frame, the knuckle is integrally molded with at least portion of the rear rocker arm.
